# EUROPÄISCHE PATENTSCHRIFT

(11) **EP 2 324 329 B1**
(45) Veröffentlichungstag und Bekanntmachung des Hinweises auf die Patenterteilung: **03.01.2018**
(21) Anmeldenummer: 09781095.6
(22) Anmeldetag: 27.07.2009
(51) Int. Cl.: G01F 1/684, G01F 1/00, F15D 1/02, F15D 1/00

(54) **SENSORANORDNUNG ZUR BESTIMMUNG EINES PARAMETERS EINES FLUIDEN MEDIUMS**
SENSOR ARRANGEMENT FOR DETERMINING A PARAMETER OF A FLUID MEDIUM
ARRANGEMENT DE DÉTECTION POUR DÉTERMINER UN PARAMÈTRE D UN MILIEU FLUIDE

(30) Priorität: 11.08.2008 DE 102008041145
(43) Veröffentlichungstag der Anmeldung: 25.05.2011
(73) Patentinhaber: Robert Bosch GmbH, 70442 Stuttgart (DE)
(72) Erfinder: MAIS, Torsten, 71636 Ludwigsburg (DE); RENNINGER, Erhard, 71706 Markgroeningen (DE); GMELIN, Christoph, 70597 Stuttgart (DE); HENNIG, Oliver, 74182 Obersulm (DE)
(86) Internationale Anmeldenummer: PCT/EP2009/059631
(87) Internationale Veröffentlichungsnummer: WO 2010/018055

(56) Entgegenhaltungen:
- EP-A1- 0 458 998
- DE-A1- 3 320 753
- DE-A1-102007 056 888
- US-A- 3 840 051

## Beschreibung

### Stand der Technik

Die Erfindung geht aus von Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müssen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom, Volumenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Verbrennungskraftmaschinen von Kraftfahrzeugen, insbesondere mit anschließender katalytischer Abgasreinigung, bei denen geregelt eine bestimmte Luftmasse pro Zeiteinheit (Luftmassenstrom) zugeführt werden muss. Zur Messung des Luftmassendurchsatzes werden dabei verschiedene Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist. Bei derartigen Heißfilmluftmassenmessern wird üblicherweise ein Sensorchip eingesetzt, welcher eine dünne Sensormembran aufweist, beispielsweise ein Silicium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt. Die vorliegende Erfindung ist jedoch nicht auf den beschriebenen Sensortyp des Heißfilmluftmassenmessers beschränkt, sondern kann grundsätzlich für die meisten Arten von Sensoren, die als fest installierte Sensoren oder als Steckfühler in einem strömenden Medium eingesetzt werden, genutzt werden.

Nachteilig an den aus dem Stand der Technik beschriebenen Steckfühlerkonstruktionen ist, dass die beschriebenen Steckfühler in vielen Fällen im Ansaugtrakt Probleme bezüglich eines Strömungswiderstand-bedingten Druckabfalls verursachen. Dies bedeutet insbesondere, dass die Signalreproduzierbarkeit der Signale derartiger Sensoren nicht optimal ist.

Viele Sensoren, insbesondere Heißfilmluftmassenmesser, werden in der Praxis mit einem Gitter oder einer Gitterkombination ausgerüstet. Diese Gitter können beispielsweise in ein Strömungsrohr integriert werden und stehen üblicherweise einige Zentimeter stromauf des Steckfühlers bzw. Sensors in der Strömung und haben die Aufgabe, das Geschwindigkeitsprofil in dem Strömungsrohr zu vergleichmäßigen. Weiterhin haben derartige Gitter die Aufgabe, einen gelegentlich vorhandenen Drall aus der Strömung zu nehmen. Die ausgleichende Wirkung des Gitters wird durch seine bremsende Wirkung auf die Strömung erzielt. Gleichzeitig wird eine kleinskalige Turbulenz erzeugt, die schnelles und langsames Fluid vermischt und so zu einem Geschwindigkeitsausgleich über den gesamten Rohrquerschnitt beiträgt. So wird erreicht, dass die Kennlinie des Sensors (zum Beispiel ein Zusammenhang zwischen Luftmasse und Ausgangsfrequenz oder Ausgangsspannung) nahezu unabhängig vom Geschwindigkeitsprofil der zuströmenden Luft ist.

Ein Beispiel einer Sensoranordnung mit einem Gitter ist in DE 199 42 502 A1 offenbart. Dabei ist ein Messelement in einer Leitung oder einem Rohrkörper strömungsabwärts eines Schutzgitters angeordnet, das eine Umlenkung der Mediumsströmung bewirkt und Flüssigkeitspartikel ablenkt. Stromabwärts des Schutzgitters können Längsrippen oder Turbulatoren vorgesehen sein, welche unkontrollierte Wirbelablösungen vermindern. EP 0 458 998 A1 offenbart eine Sensoranordnung mit einem Strömungsgleichrichter, der aus einem Wabenkörper mit quadratischen Waben gebildet wird. Stromabwärts des Gleichrichters ist ein Drahtgitter angeordnet. DE 33 20 753 A1 offenbart eine Lochplatte zur Vergleichmäßigung der Geschwindigkeitsverteilung in einem Strömungskanal. Die Strömungslöcher weisen einen Austrittsdurchmesser auf, der größer ist als der Eintrittsdurchmesser, sodass sich eine Stoßdiffusorwirkung einstellt. Die nach dem Prioritätsdatum der vorliegenden Anmeldung veröffentliche DE 10 2007 056 888 A1 der Anmelderin offenbart eine Sensoranordnung mit einem Gitter mit mindestens einer Strebe, wobei die Strebe eine Hinterkante aufweist, hinter der sich ein Ablösegebiet der Strömung bildet.

Ungünstigerweise zeigen viele Sensoranordnungen, insbesondere Luftmassenmesser, in Kombination mit herkömmlichen Gittern, beispielsweise Kunststoffgittern mit einer Maschenweite zwischen 4 und 7 mm und einer Maschentiefe von 5 bis 10 mm, in manchen Luftmassenbereichen vergleichsweise schlechtere reproduzierbare Kennlinien. Ursache für diese Problematik ist unter anderem der laminarturbulente Strömungsumschlag (Transition) an den einzelnen Gitterstreben. Da der Transitionsvorgang extrem sensitiv auf kleinste Änderungen der Randbedingungen, wie beispielsweise der Temperatur, der Geometrie, der Strömungsgeschwindigkeit oder ähnlichen Randbedingungen, reagiert und diese Parameter in der Regel nicht vollständig konstant über den Querschnitt des Strömungsrohrs vorliegen, wird die Strömung nicht überall exakt gleichzeitig turbulent. Dies führt dazu, dass Luftmassenbereiche existieren, in welchen der Strömungszustand (laminar oder turbulent) der Strömung des fluiden Mediums stromabwärts des Gitters nicht genau definiert ist und vergleichsweise schlecht reproduzierbar ist. Diese Unsicherheit schlägt sich in der Kennlinienreproduzierbarkeit des Sensorelements nieder.

### Offenbarung der Erfindung

Es wird daher eine Sensoranordnung zur Bestimmung wenigstens eines Parameters eines mit einer Hauptströmungsrichtung strömenden fluiden Mediums vorgeschlagen, welche die Nachteile bekannter Sensoranordnungen zumindest weitgehend vermeidet. Weiterhin wird ein Gitter für den Einsatz in einer derartigen Sensoranordnung vorgeschlagen.

Ein Gedanke der Erfindung besteht darin, die Strömung des strömenden fluiden Mediums möglichst frühzeitig, das heißt bei sehr kleinen Strömungsgeschwindigkeiten, turbulent auszugestalten und damit einen eindeutigen Strömungszustand herzustellen. Dies erfolgt durch Verwendung eines verbesserten Gitterstrebenprofils, welches dafür sorgt, dass die Strömung vergleichsweise schnell, das heißt bereits bei kleinen Strömungsgeschwindigkeiten, turbulent wird. Hierdurch herrscht stets ein eindeutiger, gut reproduzierbarer Strömungszustand, und das Geschwindigkeitsprofil wird durch einen verstärkten Impulsaustausch quer zur Strömungsrichtung effektiv vergleichmäßigt. Hierdurch sinkt die Anströmempfindlichkeit gegenüber Änderungen des Geschwindigkeitsprofils durch äußere Einflüsse, wie beispielsweise eine Verschmutzung eines Filterelements in einer der Sensoranordnung vorgeschalteten Ansaugstrecke.

Insgesamt lassen sich mittels der vorgeschlagenen Sensoranordnung somit stabilere Strömungen und höhere Reproduzierbarkeiten der Sensorsignale erzeugen. Auf sonstige, strömungsstabilisierende Maßnahmen, wie beispielsweise zusätzliche Drahtgitter, kann vorzugsweise verzichtet werden, so dass sich auch die Herstellungskosten für die vorgeschlagene Sensoranordnung gegenüber herkömmlichen Sensoranordnungen verringern lassen. Naturgemäß können optional jedoch dennoch weitere strömungsstabilisierende Maßnahmen vorgesehen sein. Insgesamt weist die Sensoranordnung eine hohe Signalqualität im Vergleich zu herkömmlichen Sensoranordnungen auf, insbesondere ein verbessertes Signalrauschen.

Die Sensoranordnung ist grundsätzlich geeignet für eine Vielzahl der eingangs genannten Sensoren und Messprinzipien sowie für eine Vielzahl fluider Medien, beispielsweise Gase und Flüssigkeiten. Es lassen sich prinzipiell eine Vielzahl möglicher physikalischer und/oder chemischer Parameter messen, wie beispielsweise Druck, Temperatur, Dichte, Massendurchsatz, Volumendurchsatz oder Ähnliches. Dementsprechend weist die Sensoranordnung mindestens einen Sensor auf, welcher an die Art des bzw. der zu messenden Parameter angepasst ist. Im Folgenden sei, ohne andere Arten möglicher Ausgestaltungen der Erfindung zu beschränken, angenommen, dass der Sensor einen Heißfilmluftmassenmesser umfasst, wie er beispielsweise in der eingangs genannten DE 196 01 791 A1 oder weiteren der zitierten Schriften des Standes der Technik beschrieben wird.

Grundsätzlich kann das fluide Medium zumindest weitgehend frei in der Hauptströmungsrichtung strömen, wobei unter der Hauptströmungsrichtung die lokale Strömungsrichtung des Mediums im Bereich der Sensoranordnung zu verstehen ist. Hierbei sollen jedoch lokale Unregelmäßigkeiten, wie beispielsweise Verwirbelungen, außer Betracht bleiben, so dass unter der Hauptströmungsrichtung die Haupttransportrichtung, in welcher das fluide Medium im Bereich der Sensoranordnung transportiert wird, zu verstehen ist. Vorzugsweise strömt das fluide Medium durch ein Strömungsrohr, wobei die Sensoranordnung beispielsweise ein Strömungsrohrsegment umfassen kann, mit mindestens einem Gehäuse, in welches (beispielsweise mittels mindestens einer Aufnahme) der mindestens eine Sensor eingebracht werden kann.

Die Sensoranordnung weist weiterhin mindestens ein quer zur Hauptströmungsrichtung angeordnetes Gitter mit mindestens einer Strebe auf. Vorzugsweise sind mehrere derartige Streben vorgesehen, welche beispielsweise parallel und/oder in von 0° verschiedenen Winkeln zueinander orientiert sein können. Auch ein Gitter miteinander kreuzenden Streben, beispielsweise analog zum oben beschriebenen Stand der Technik, ist denkbar. Vorzugsweise ist das Gitter Teil des besagten Strömungsrohrsegments, beispielsweise in Form eines herausnehmbaren Teil des Strömungsrohrsegments. Erfindungsgemäß wird daher weiterhin, neben der Sensoranordnung, ein Gitter für den Einsatz in einer derartigen Sensoranordnung vorgeschlagen, für welches die im Folgenden beschriebenen, das Gitter betreffenden Ausgestaltungen analog gelten.

Unter dem Begriff "quer zur Strömungsrichtung" ist dabei im vorliegenden Fall vorzugsweise ein Winkel von 90° zwischen den Streben und der Hauptströmungsrichtung zu verstehen, wobei jedoch auch Abweichungen von 90° denkbar sind, beispielsweise Abweichungen um nicht mehr als 20°. Insofern kann das Gitter beispielsweise ganz oder teilweise den aus dem Stand der Technik bekannten Gittern, wie beispielsweise den DE 199 42 502 A1 bekannten Gittern, entsprechen.

Die Streben des Gitters können beispielsweise mit ihren von dem Medium überströmten Oberflächen parallel zur Hauptströmungsrichtung ausgerichtet sein, was im Rahmen der vorliegenden Erfindung bevorzugt ist. Auch Abweichungen von dieser Parallelität sind jedoch möglich, beispielsweise Abweichungen um nicht mehr als 50°, besonders bevorzugt um nicht mehr als 20° und insbesondere um nicht mehr als 5°. Grundsätzlich sind jedoch auch andere Winkelabweichungen möglich.

Das Gitter kann als Strömungsgleichrichter stromaufwärts des Sensorelements wirken. Beispielsweise kann das Gitter ein Kunststoffgitter umfassen. Das Gitter kann beispielsweise als Maschengitter ausgestaltet sein, insbesondere als Maschengitter mit einer Maschenweite von 4 bis 8 mm. Das Gitter kann beispielsweise in einem Abstand zwischen 10 und 50 mm vor dem Sensor positioniert sein.

Im Unterschied zu den aus dem Stand der Technik bekannten Gittern weist das erfindungsgemäß eingesetzte Gitter zur Verwirklichung des oben beschriebenen Grundgedankens der Erfindung mindestens eine Gitterstrebe mit verbessertem Querschnitt auf. Diese Verbesserung besteht insbesondere darin, dass auf mindestens einer von dem fluiden Medium überströmten Oberfläche der Strebe mindestens ein Scherelement vorgesehen ist. Dieses Scherelement ist ausgestaltet, um stromabwärts des Scherelements in der Strömung eine Region mit turbulenter Strömung zu erzeugen. Diese Schichten mit hohem Geschwindigkeitsgradienten, insbesondere quer zur Hauptströmungsrichtung, bilden zusätzliche Scherschichten, welche stark instabil sind. Durch die dadurch hervorgerufenen Strömungsfluktuationen wird der Nachlauf hinter der Gitterstrebe angeregt, das heißt zum Schwingen gebracht, und wird sehr früh, das heißt bereits bei sehr kleinen Strömungsgeschwindigkeiten, hochfrequent turbulent. Dadurch lässt sich der Strömungsumschlag von laminar nach turbulent sehr weit zu kleinen Strömungsgeschwindigkeiten hin verschieben. Die Strömung am Sensor ist also über nahezu den gesamten Betriebsbereich turbulent.

Das mindestens eine Scherelement kann insbesondere mindestens einen quer zur Hauptströmungsrichtung, also beispielsweise parallel zur Längserstreckung der Strebe, angeordneten Absatz in seiner Oberfläche aufweisen. Dieser Absatz kann insbesondere scharfkantig ausgebildet sein. Das Scherelement kann insbesondere auf zwei einander gegenüberliegenden Oberflächen der Strebe vorgesehen sein, wobei die Strebe beispielsweise einen im Wesentlichen symmetrischen Querschnitt aufweist.

Die Strebe weist stromabwärts des Scherelements, beispielsweise stromabwärts des Absatzes, welcher beispielsweise stufenförmig ausgestaltet sein kann, einen verengten Fortsatz auf, also einen Bereich der Strebe, in welchem ihr Querschnitt enger ist als zumindest im Bereich des Absatzes und vorzugsweise enger als im übrigen Bereich der Gitterstrebe. Dieser Fortsatz kann sich beispielsweise in Hauptströmungsrichtung verjüngen. So kann der Fortsatz beispielsweise eine Schräge relativ zu einer Symmetrieachse der Strebe aufweisen. Beispielsweise kann ein Verjüngungswinkel α, also ein Winkel zwischen der Schräge und der Symmetrieachse, zwischen 0° und 10° verwendet werden.

Stromaufwärts des Scherelements, also beispielsweise stromaufwärts des Absatzes, kann die Strebe einen im Querschnitt abgerundeten Anlaufabschnitt aufweisen. Dieser Anlaufabschnitt kann beispielsweise im Wesentlichen eine Keilform aufweisen, wobei die Spitze des Keils der Hauptströmungsrichtung entgegenweist. Diese Spitze kann abgerundet ausgestaltet sein. Die Keilflächen der Keilform können eben oder auch gekrümmt ausgestaltet sein. Alternativ zu einer Keilform sind jedoch auch andere Formen möglich, beispielsweise eine U-Form, eine Tragflächenform oder eine andere abgerundete bzw. gekrümmte Form.

Wie oben dargestellt, kann das Gitter insbesondere als Kreuzgitter ausgestaltet sein, mit mindestens zwei, vorzugsweise mehr, einander an mindestens einem Kreuzungspunkt kreuzenden Streben. Die Streben können sich unter einem rechten Winkel oder auch unter einem von einem rechten Winkel abweichenden Winkel kreuzen.

In einer bevorzugten Ausführungsform können die Streben im Bereich der Kreuzungspunkte jeweils mindestens stromabwärtige Aussparung aufweisen, in welcher die Strebentiefe, also die Tiefe der Streben entlang ihrer Symmetrieachse, reduziert ist. Diese erfindungsgemäße Aussparung im Bereich der Kreuzungspunkte hat grundsätzlich zwei Effekte zur Folge. So wird durch eine lokale Reduktion des Wandeinflusses das Geschwindigkeitsprofil homogener und stabiler. Die Ablösegebiete hinter den Gitterstreben werden kleiner. Weiterhin werden in den vorgeschlagenen Aussparungen Längswirbel erzeugt, die für einen verstärkten Impulsaustausch zwischen langsamem fluidem Medium (in der Ablösezone) und schnellem fluidem Medium (außerhalb der Ablösezone) hinter den Streben sorgen. Auch hierdurch werden die Ablösegebiete verkleinert und stabilisiert, und das Geschwindigkeitsprofil wird insgesamt homogener ausgestaltet. Diese Ausführungsform der Erfindung wirkt also zusätzlich auf eine Vergleichmäßigung der Strömung und eine höhere Signalreproduzierbarkeit der Sensoranordnung hin.

### Kurze Beschreibung der Zeichnungen

Ausführungsbeispiele der Erfindung sind in den Zeichnungen dargestellt und in der nachfolgenden Beschreibung näher erläutert. Es zeigen
- Figuren 1A und 1B: verschiedene Darstellungen eines möglichen Ausführungsbeispiels einer Sensorsanordnung;
- Figur 2: eine perspektivische Detaildarstellung eines Ausführungsbeispiels eines erfindungsgemäßen Gitters;
- Figur 3: einen Querschnitt durch eine Strebe des Gitters gemäß Figur 2 mit Darstellung der Umströmungseigenschaften durch das fluide Medium;
- Figur 4: die Gitterstrebe gemäß Figur 3 mit bevorzugten Abmessungen; und
- Figur 5: eine erfindungsgemäße Ausführungsform des Gitters mit Aussparungen an den Kreuzungspunkten.

### Ausführungsformen der Erfindung

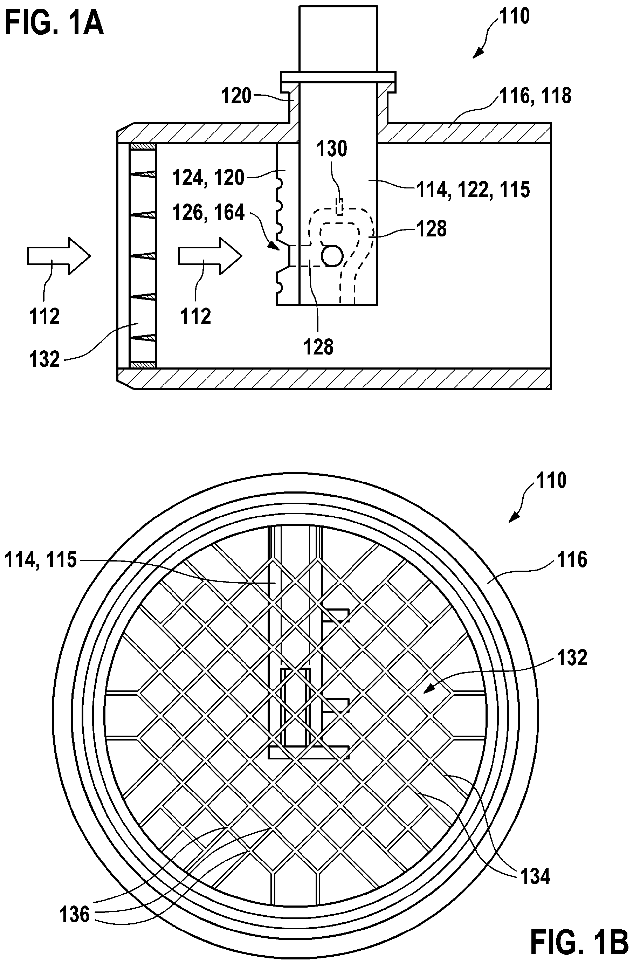

In den Figuren 1A und 1B ist eine Sensoranordnung 110 dargestellt, wie sie aus dem Stand der Technik bekannt ist, welche beispielsweise kommerziell erhältlich ist (z.B. in Form eines Heißfilmluftmassenmessers vom Typ "HFM7" der Robert Bosch GmbH) und welche im Rahmen der vorliegenden Erfindung erfindungsgemäß modifiziert werden kann. Dabei zeigt Figur 1A eine Schnittdarstellung der Sensoranordnung 110 von der Seite, wohingegen in Figur 1B die Sensoranordnung 110 in Blickrichtung von vorne, entlang einer Hauptströmungsrichtung 112 eines strömenden fluiden Mediums, dargestellt ist.

Für Ausführungsbeispiele zum Aufbau der Sensoranordnung 110 kann weitgehend auf den Stand der Technik verwiesen werden. Die Sensoranordnung 110 ist in diesem Ausführungsbeispiel als Heißfilmluftmassenmesser-Sensoranordnung ausgestaltet und weist einen Heißfilmluftmassenmesser 114 auf. Wie oben dargestellt, können jedoch alternativ oder zusätzlich auch andere Arten von Sensoren vorgesehen sein.

Die Sensoranordnung 110 kann ein Strömungsrohrsegment 116 umfassen, mit einem Gehäuse 118. Das Gehäuse 118 weist eine Aufnahme 120 auf, in welche ein Messfinger 122 des Heißfilmluftmassenmessers 114 eingesteckt werden kann. Die Aufnahme 120 ist dabei derart ausgestaltet, dass diese anströmseitig des Messfingers 122 eine Anströmkante 124 umfasst, für deren Ausgestaltung beispielsweise wiederum auf den Stand der Technik verwiesen werden kann. In der Anströmkante 124 ist ein Einlass 126 in Form einer Öffnung eingelassen. Im Messfinger 122 schließt sich an diesen Einlass 126 ein Strömungskanal 128 an, in welchem ein Sensorelement 130 angeordnet ist. Für die Ausgestaltung des Strömungskanals 128 und des Sensorelements 130, welche die Funktionalität des Heißfilmluftmassenmessers 114 bedingen, kann beispielsweise wiederum auf den Stand der Technik verwiesen werden. Sämtliche Elemente sind in den Figuren 1A und 1B nur schematisch angedeutet.

Wie insbesondere in Figur 1B erkennbar ist, weist das Strömungsrohrsegment 116 der Sensoranordnung 110 weiterhin ein stromaufwärts des Messfingers 122 angeordnetes Gitter 132 auf. Dieses Gitter 132 ist im vorliegenden Ausführungsbeispiel als Maschengitter mit einer Vielzahl von einander in diesem Ausführungsbeispiel im Wesentlichen senkrecht kreuzenden Streben 134 ausgestaltet. Diese Streben 134 kreuzen sich an einer Vielzahl von Kreuzungspunkten 136. Das Gitter kann beispielsweise als rundes, aus dem Strömungsrohrsegment 116 herausnehmbares Einzelteil ausgestaltet sein, wofür beispielsweise in dem Strömungsrohrsegment 116 einlassseitig eine Nut für die Aufnahme des Gitters 132 vorgesehen sein kann. Das Gitter 132 sowie das Strömungsrohrsegment 116 und Teile des Messfingers 122 können beispielsweise ganz oder teilweise als Kunststoffbauteile ausgestaltet sein, und können beispielsweise als Werkstoff ein Polyamid und/oder ein Polybutylenterephthalat umfassen, beispielsweise mit einer Glasfaserfüllung von 30%.

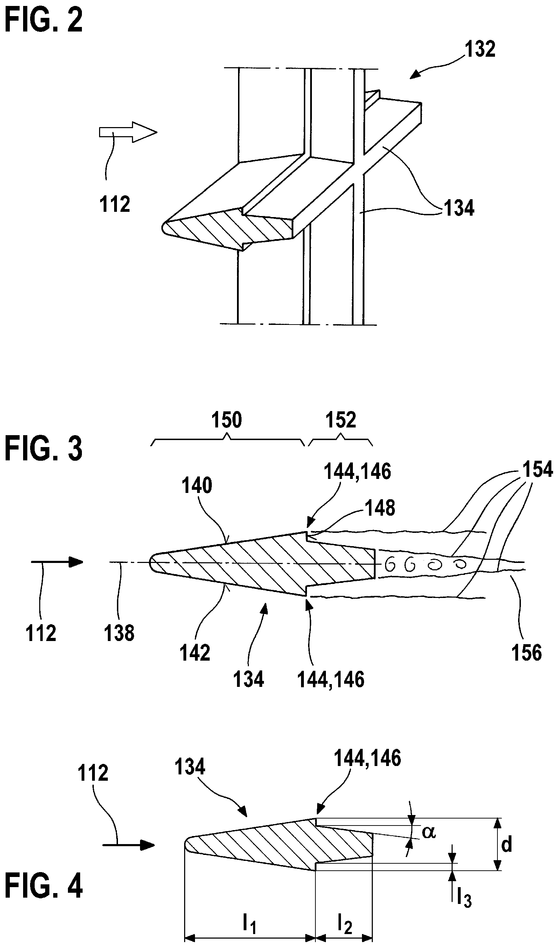

In den Figuren 1A und 1B sind die Streben 134 des Gitters 132 lediglich schematisch angedeutet. In den Figuren 2 bis 5 ist in verschiedenen Ausführungsbeispielen dargestellt, wie dieses Gitter 132 und die Streben 134 erfindungsgemäß modifiziert werden können.

So zeigen die Figuren 2 bis 4 ein erstes Ausführungsbeispiel einer erfindungsgemäßen Ausführungsform des Gitters 132. Das Gitter 132 ist dabei als Kreuzgitter ausgestaltet, mit einander beispielsweise rechtwinklig kreuzenden Streben 134. Dabei ist in der perspektivischen Schnittdarstellung der Figur 2 waagerecht verlaufenden Strebe 134 erkennbar, dass diese Strebe ein Profil mit einem zumindest näherungsweise optimierten Querschnitt aufweist. Dieser Querschnitt ist in den Figuren 3 und 4 im Detail weiter dargestellt, wobei Figur eine Erläuterung der Strömungsverhältnisse um die Gitterstrebe 134 zeigt und Figur 4 bevorzugte Abmessungen. Dabei ist in dem Ausführungsbeispiel gemäß Figur 2 zu erkennen, dass sowohl die horizontal als auch die vertikal verlaufenden Streben 134 den erfindungsgemäßen Querschnitt aufweisen. Alternativ könnten jedoch auch lediglich einzelne der Streben 134 einen derartigen Querschnitt aufweisen, beispielsweise lediglich die horizontal verlaufenden Streben oder die vertikal verlaufenden Streben oder lediglich einige der Streben 134, beispielsweise nur jede zweite Strebe 134.

Die Streben 134 sind, wie beispielsweise in Figur 3 erkennbar, beispielsweise parallel zur Hauptströmungsrichtung 112 orientiert, das heißt in einer Orientierung, in welcher eine Symmetrieachse 138 der Streben 134 zumindest näherungsweise parallel zur Hauptströmungsrichtung 112 orientiert ist. Wie oben beschrieben, sind jedoch auch andere Ausrichtungen der Streben 134 möglich, beispielsweise Orientierungen unter einem Anstellwinkel. Weiterhin weisen die Streben in den Figuren ein symmetrisches Profil zur Symmetrieachse 138 auf. Auch dies ist nicht notwendigerweise erforderlich, so dass auch asymmetrische Profile eingesetzt werden können.

Die Streben 134 weisen zwei von dem strömenden fluiden Medium überströmte Oberflächen 140, 142 auf. Auf diesen überströmten Oberflächen ist jeweils ein Scherelement 144 in Form eines Absatzes 146 vorgesehen, wobei die Scherelemente 144 in dem dargestellten Ausführungsbeispiel im Wesentlichen identisch ausgestaltet sind. Auch dies ist jedoch nicht notwendigerweise erforderlich. Der Absatz 146 ist dabei scharfkantig ausgebildet und weist an seiner stromabwärtigen Seite eine Querfläche 148 auf, welche beispielsweise senkrecht oder in einem leicht von 80° abweichenden Winkel, beispielsweise einem Winkel zwischen 70 und 110°, zur Hauptströmungsrichtung 112 bzw. zur Symmetrieachse 138 angeordnet sein kann. Die Querfläche 148 kann beispielsweise eben ausgestaltet sein.

Das Scherelement 144 unterteilt das Profil der Strebe 134 in einen Anlaufabschnitt 150, welcher stromaufwärts des Scherelements 144 angeordnet ist, und einen Fortsatz 152, welcher stromabwärts des Scherelements 144 angeordnet ist. Der Anlaufabschnitt 150 weist dabei in dem in Figur 3 dargestellten Ausführungsbeispiel eine Keilform mit einer der Hauptströmungsrichtung 112 entgegenweisenden, abgerundeten Spitze auf. Der Fortsatz 152 hingegen weist eine Schräge auf und ist etwas schmaler ausgestaltet als die übrige Strebe 134, beispielsweise etwas schmaler als die Strebe 134 im breitesten Bereich an den Scherelementen 144.

In Figur 4 sind bevorzugte Dimensionen des in Figur 3 dargestellten Ausführungsbeispiels der Strebe 134 dargestellt. Dabei bezeichnet die Länge l₁ die Länge des Anlaufabschnitts 150, welche beispielsweise zwischen 3 mm und 7 mm liegen kann. Die Länge l₂ des Fortsatzes 152 kann beispielsweise zwischen 2 mm und 5 mm liegen. Die Höhe eines einzelnen Absatzes 146, also die Breite der Querfläche 148, welche in Figur 4 mit l₃ bezeichnet ist, kann beispielsweise zwischen 0,05 und 0,2 mm liegen. Die Breite der Strebe 134 an ihrer breitesten Stelle im Bereich der Scherelemente 144, welche in Figur 4 mit d bezeichnet ist, kann beispielsweise zwischen 0,5 und 1,5 mm liegen. Weiterhin ist in Figur 4 der Verjüngungswinkel α dargestellt, also der Winkel, der beispielsweise eben ausgestalteten Flächen des Fortsatzes 152 relativ zur Symmetrieachse 138. Dieser Verjüngungswinkel α kann beispielsweise zwischen 0° und 10° liegen.

In Figur 3 sind weiterhin symbolisch die Strömungsverhältnisse an und hinter der Strebe 134 dargestellt. Dabei ist zu erkennen, dass sich hinter den Scherelementen 144 Scherschichten 154 bilden, in welchen ein hoher Geschwindigkeitsgradient senkrecht zur Hauptströmungsrichtung 112 und/oder zur Symmetrieachse 138 vorliegt. Diese Scherschichten 154 sind stark instabil und rufen Strömungsfluktuationen hervor, durch welche der Nachlauf 156 hinter der Strebe 134 zu Schwingungen angeregt wird und sehr früh, das heißt bereits bei kleinen Strömungsgeschwindigkeiten, hochfrequent turbulent wird.

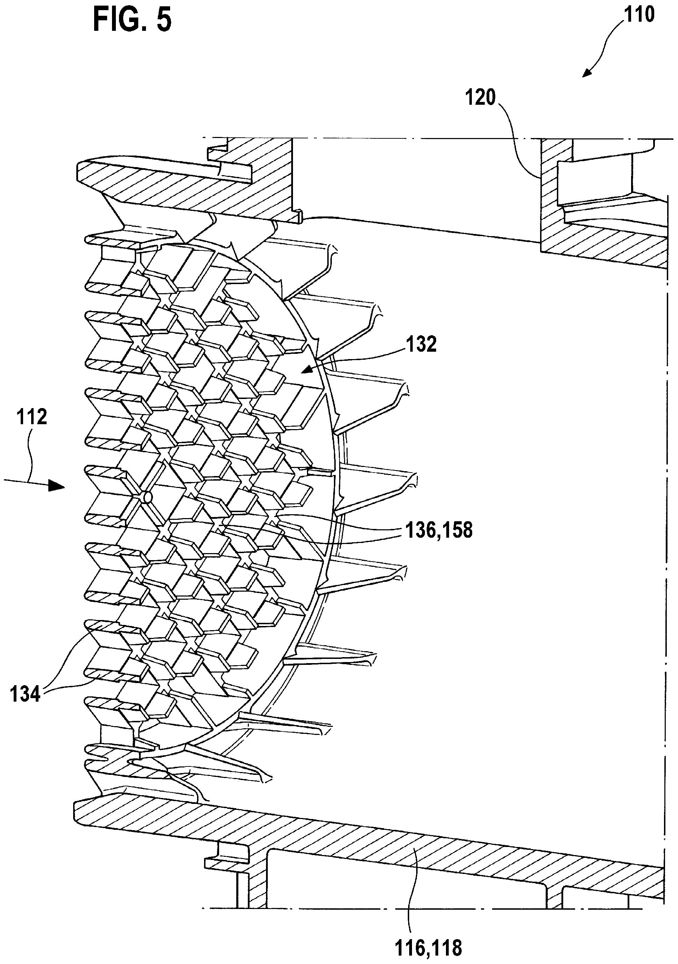

Das in Figur 2 gezeigte Ausführungsbeispiel des Gitters 132 weist Streben 134 auf, welche eine durchgehend konstante Strebentiefe, also eine Längserstreckung parallel zur Symmetrieachse 138, aufweisen. In Figur 5 ist demgegenüber ein Ausschnitt einer erfindungsgemäßen Sensoranordnung 110 in perspektivischer Darstellung gezeigt, bei welchem das Gitter 132 Gitterstreben 134 aufweist, welche entlang ihrer Längserstreckung eine variierende Strebentiefe aufweisen. So sind die Streben 134 des Gitters 132 jeweils an ihren Kreuzungspunkten 136 jeweils an ihrer stromabwärtigen Seite mit Aussparungen 158 versehen, in welchen die Strebentiefe der Streben 134 lokal reduziert ist. Beispielsweise können die Streben 134 im Bereich dieser Aussparungen 158 jeweils um ihren Fortsatz 152 vermindert sein und lediglich den Anlaufabschnitt 150 aufweisen. Die Tiefe der Aussparungen 158, das heißt die maximale Verringerung der Strebentiefe in den Aussparungen, liegt vorzugsweise im Bereich von ca. 50 Prozent der Strebentiefe, wobei jedoch auch andere Tiefen der Aussparung möglich sind, beispielsweise im Bereich zwischen 10 Prozent und 80 Prozent der Strebentiefe.

Durch diese Aussparungen 158 wird, wie oben dargestellt, das Geschwindigkeitsprofil der Strömung des fluiden Mediums homogener und damit stabiler. Ablösegebiete hinter den Gitterstreben 134 werden kleiner. Weiterhin werden in den vorgeschlagenen Aussparungen in den Streben Längswirbel erzeugt, die für einen verstärkten Impulsaustausch zwischen dem langsamen fluiden Medium und dem schnellen fluiden Medium innerhalb bzw. außerhalb der Ablösezone hinter den Streben 134 sorgen. Auch hierdurch werden die Ablösegebiete verkleinert und stabilisiert, und das Geschwindigkeitsprofil wird homogener ausgestaltet.

## Patentansprüche

1. Sensoranordnung (110) zur Bestimmung wenigstens eines Parameters eines mit einer Hauptströmungsrichtung (112) strömenden fluiden Mediums, insbesondere einer durch ein Strömungsrohr strömenden Ansaugluftmasse einer Brennkraftmaschine, wobei die Sensoranordnung (110) mindestens einen in dem fluiden Medium angeordneten Sensor (115) zur Bestimmung des Parameters des fluiden Mediums aufweist, wobei die Sensoranordnung (110) weiterhin mindestens ein quer zur Hauptströmungsrichtung (112) angeordnetes Gitter (132) mit mindestens einer Strebe (134) umfasst,
**dadurch gekennzeichnet, dass**
die Strebe (134) auf mindestens einer von dem fluiden Medium überströmten Oberfläche (140, 142) mindestens ein Scherelement (144) aufweist, wobei die Strebe (134) stromabwärts des Scherelements (144) einen verengten Fortsatz (152) aufweist, und
wobei das Scherelement (144) ausgestaltet ist, um stromabwärts des Scherelements (144) in der Strömung eine Region (154) mit turbulenter Strömung zu erzeugen.

2. Sensoranordnung (110) nach dem vorhergehenden Anspruch, wobei das Scherelement (144) mindestens einen quer zur Hauptströmungsrichtung (112) angeordneten Absatz (146) in der Oberfläche (140, 142) der Strebe (134) umfasst.

3. Sensoranordnung (110) nach dem vorhergehenden Anspruch, wobei der Absatz (146) scharfkantig ausgebildet ist.

4. Sensoranordnung (110) nach einem der vorhergehenden Ansprüche, wobei die Strebe (134) mindestens zwei auf einander gegenüberliegenden Oberflächen (140, 142) angeordnete Scherelemente (144) aufweist.

5. Sensoranordnung (110) nach einem der vorhergehenden Ansprüche, wobei die Strebe (134) einen im Wesentlichen symmetrischen Querschnitt aufweist.

6. Sensoranordnung (110) nach einem der vorhergehenden Ansprüche, wobei sich der Fortsatz (152) in Hauptströmungsrichtung (112) verjüngt.

7. Sensoranordnung (110) nach dem vorhergehenden Anspruch, wobei der Fortsatz (152) einen Verjüngungswinkel α zwischen 0° und 10° aufweist.

8. Sensoranordnung (110) nach einem der vorhergehenden Ansprüche, wobei die Strebe (134) stromaufwärts des Scherelements (144) einen Anlaufabschnitt (150), insbesondere einen abgerundeten Anlaufabschnitt (150), aufweist.

9. Sensoranordnung (110) nach dem vorhergehenden Anspruch, wobei der Anlaufabschnitt (150) im Wesentlichen eine Keilform aufweist.

10. Sensoranordnung (110) nach einem der vorhergehenden Ansprüche, wobei das Gitter (132) als Kreuzgitter ausgestaltet ist und mindestens einen Kreuzungspunkt (136) zweier Streben (134) aufweist, wobei die Streben (134) im Bereich des Kreuzungspunktes (136) jeweils mindestens eine stromabwärtige Aussparung (158) aufweisen, in welcher eine Strebentiefe der Streben (134) reduziert ist.

## Claims

1. Sensor arrangement (110) for determining at least one parameter of a fluid medium flowing in a main flow direction (112), in particular an intake air mass of an internal combustion engine flowing through an intake pipe, the sensor arrangement (110) having at least one sensor (115) arranged in the fluid medium for determining the parameter of the fluid medium, the sensor arrangement (110) also comprising at least one grid (132) arranged transversely with respect to the main flow direction (112) and having at least one strut (134),
**characterized in that**
the strut (134) has at least one shear element (144) arranged on at least one surface (140, 142) over which the fluid medium flows, wherein the strut (134) has a narrowed extension (152) downstream of the shear element (144), and
wherein the shear element (144) is configured to produce a region (154) with turbulent flow in the flow downstream of the shear element (144).

2. Sensor arrangement (110) according to the preceding claim, wherein the shear element (144) has at least one ledge (146) in the surface (140, 142) of the strut (134), arranged transversely with respect to the main flow direction (112).

3. Sensor arrangement (110) according to the preceding claim, wherein the ledge (146) is formed with a sharp edge.

4. Sensor arrangement (110) according to one of the preceding claims, wherein the strut (134) has at least two shear elements (144) arranged on mutually opposite surfaces (140, 142).

5. Sensor arrangement (110) according to one of the preceding claims, wherein the strut (134) has a substantially symmetrical cross section.

6. Sensor arrangement (110) according to one of the preceding claims, wherein the extension (152) tapers in the main flow direction (112).

7. Sensor arrangement (110) according to the preceding claim, wherein the extension (152) has a taper angle α between 0° and 10°.

8. Sensor arrangement (110) according to one of the preceding claims, wherein the strut (134) has a run-on section (150), in particular a rounded run-on section (150), upstream of the shear element (144) .

9. Sensor arrangement (110) according to the preceding claim, wherein the run-on section (150) substantially has a wedge shape.

10. Sensor arrangement (110) according to one of the preceding claims, wherein the grid (132) is configured as a cross grid and has at least one crossing point (136) of two struts (134), wherein the struts (134) in the region of the crossing point (136) each have at least one downstream recess (158), in which a depth of the struts (134) is reduced.

## Revendications

1. Arrangement de détection (110) destiné à déterminer au moins un paramètre d'un milieu fluide qui s'écoule avec un sens d'écoulement principal (112), notamment d'une masse d'air aspiré d'un moteur à combustion interne qui s'écoule à travers un tube d'écoulement, l'arrangement de détection (110) possédant au moins un capteur (115) disposé dans le milieu fluide en vue de déterminer le paramètre du milieu fluide, l'arrangement de détection (110) comprenant en outre au moins une grille (132) pourvue d'au moins une barre de renfort (134) disposée transversalement par rapport au sens d'écoulement principal (112),
**caractérisé en ce que**
la barre de renfort (134) possède au moins un élément de cisaillement (144) sur au moins une surface (140, 142) sur laquelle s'écoule le milieu fluide, la barre de renfort (134) possédant un prolongement (152) rétrécit en aval de l'élément de cisaillement (144) et l'élément de cisaillement (144) étant configuré pour générer une région (154) avec un écoulement turbulent dans l'écoulement en aval de l'élément de cisaillement (144).

2. Arrangement de détection (110) selon la revendication précédente, l'élément de cisaillement (144) comprenant au moins un talon (146) disposé transversalement par rapport au sens d'écoulement principal (112) dans la surface (140, 142) de la barre de renfort (134).

3. Arrangement de détection (110) selon la revendication précédente, le talon (146) étant réalisé avec des arêtes vives.

4. Arrangement de détection (110) selon l'une des revendications précédentes, la barre de renfort (134) possédant au moins deux éléments de cisaillement (144) disposés sur des surfaces (140, 142) opposées.

5. Arrangement de détection (110) selon l'une des revendications précédentes, la barre de renfort (134) possédant une section transversale sensiblement symétrique.

6. Arrangement de détection (110) selon l'une des revendications précédentes, le prolongement (152) se rétrécissant dans le sens d'écoulement principal (112).

7. Arrangement de détection (110) selon l'une des revendications précédentes, le prolongement (152) possédant un angle de rétrécissement α entre 0° et 10°.

8. Arrangement de détection (110) selon l'une des revendications précédentes, la barre de renfort (134) possédant, en amont de l'élément de cisaillement (144), une portion d'amorçage (150), notamment une portion d'amorçage (150) arrondie.

9. Arrangement de détection (110) selon l'une des revendications précédentes, la portion d'amorçage (150) étant sensiblement cunéiforme.

10. Arrangement de détection (110) selon l'une des revendications précédentes, la grille (132) étant réalisée sous la forme d'une grille croisée et possédant au moins un point d'intersection (136) de deux barres de renfort (134), les barres de renfort (134) possédant respectivement, dans la zone du point d'intersection (136), au moins une cavité (158) en aval dans laquelle une profondeur de barre de renfort des barres de renfort (134) est réduite.
